# EUROPÄISCHE PATENTSCHRIFT

(11) **EP 0 778 063 B1**
(45) Veröffentlichungstag und Bekanntmachung des Hinweises auf die Patenterteilung: **09.02.2000**
(21) Anmeldenummer: 95810775.7
(22) Anmeldetag: 08.12.1995
(51) Int. Cl.: B01D 24/22, B01D 24/46

(54) **Rückspülbare Filteranlage**
Backwash filtration device
Dispositif de filtration à nettoyage par contre-courant

(43) Veröffentlichungstag der Anmeldung: 11.06.1997
(73) Patentinhaber: CT Umwelttechnik AG, CH-8404 Winterthur (CH)
(72) Erfinder: Schmidt, Rolf, D-35305 Grünberg-Queckborn (DE)
(74) Vertreter: Trieblnig, Adolf

(56) Entgegenhaltungen:
- FR-A- 1 262 056
- GB-A- 2 275 209

## Beschreibung

Die Erfindung betrifft eine rückspülbare Filteranlage gemäss Oberbegriff von Anspruch 1 sowie Verwendungen der Filteranlage bei der Reinigung von Wasser. Unter Wasser wird hier auch Abwasser verstanden.

Eine derartige Filteranlage ist aus der GB-A 2 275 204 bekannt.

Aus der DE-PS 11 38 377 ist eine sogenannte rückspülbare Schnellfilteranlage bekannt, bei der mit einer Druckluftquelle einerseits Spülluft erzeugt und andererseits Spülwasser durch Wasserverdrängung gefördert wird. Aus der EP-A 0 385 050 ist eine rückspülbare Mehrschicht-Filteranlage bekannt, bei der ein Drei-Phasen-Rückspülverfahren angewendet wird (1.Phase: Luftspülung, 2.Phase: Luft/Wasser-Spülung, 3.Phase: reine Wasserspülung, durch welche die untereinander vermischten körnigen Filtermaterialien wieder nach Grösse und Schwere getrennt werden).

Für das Fördern und Verteilen der Spülmedien, nämlich der Spülluft sowie des Spülwassers, wird bei den bekannten Filteranlagen ein aufwendiges Rohrleitungsnetz benötigt. Aufgabe der Erfindung ist es, eine rückspülbare Filteranlagen zu schaffen, bei der die Verteilung der Spülmedien günstiger herstellbar ist. Diese Aufgabe wird durch die in Anspruch 1 definierte Anlage gelöst.

Die rückspülbare Filteranlage umfasst mindestens eine Gruppe von Filterfeldern, mindestens einen Spülwasserspeicher und Fördermittel für die Spülmedien. Erfindungsgemäss ist der oder jeder Gruppe ein Spülmedienkanal zugeordnet. Dieser Kanal ist mit den Filterfeldern der zugeordneten Gruppe jeweils über Leitungen für Spülluft sowie Spülwasser verbunden. Ferner ist er über eine Leitung mit dem Fördermittel für die Spülluft und über eine weitere Leitung mit dem Spülwasserspeicher verbunden. Der Spülmedienkanal bildet ein abschliessbares Teilsystem oder ist in einem solchen enthalten, wobei dieses Teilsystem gegen aussen durch in dessen Anschlussleitungen angeordnete Absperrorgane verschliessbar ist. Der Spülmedienkanal, in dem die beiden Spülmedien gemeinsam transportierbar sind, ersetzt einen grossen Teil des üblichen Spülmediennetzes.

Im Vergleich mit den bekannten Rohrleitungsnetzen ist bei der erfindungsgemässen Filteranlage der Aufwand für die Installation des Verteilsystems kleiner. Der genannte Spülmedienkanal kann eine variable Menge an Wasser aufnehmen, wodurch sich eine Pufferwirkung ergibt, die insbesondere bei Beginn der Wasserspülphase vorteilhaft ist. Bei der eingangs genannten Filteranlage der GB-A 2 275 204 ist eine derartige Pufferwirkung nicht möglich.

Anspruch 2 betrifft eine vorteilhafte Ausführungsform der erfindungsgemässen Anlage. Die folgenden abhängigen Ansprüche 2 bis 7 beziehen sich auf eine Klasse von erfindungsgemässen Filteranlagen, für die jeweils der Spülmedienkanal eine wesentliche Anlagenkomponente darstellt. Die Mitglieder dieser Klasse unterscheiden sich durch verschieden ausgebildete Spülwasserspeicher. Die abhängigen Ansprüche 8 und 9 beziehen sich auf weitere vorteilhafte Ausführungsformen der erfindungsgemässen Anlage.

Gegenstand der Ansprüche 10 und 11 ist jeweils eine Verwendung der erfindungsgemässen Anlage, nämlich Verwendung zum Abtrennen von suspendierten Feststoffen oder Schwebestoffen aus Wasser und Verwendung zum biologischen Abwasserreinigen. Bei diesen Verwendungen müssen die in dem Filtermittel abgelagerten Feststoffe bzw. der Zuwuchs an Biomasse von Zeit zu Zeit ausgespült werden.

Nachfolgend wird die Erfindung anhand der Zeichnungen erläutert. Es zeigen:
- Fig. 1: ein Schema einer ersten Ausführungsform der erfindungsgemässen Filteranlage,
- Fig. 2: ein Schrägbild, das die erste Ausführungsform (weiter vereinfacht) darstellt,
- Fig. 3: ein Diagramm zur Erläuterung der Funktionsweise der ersten Filteranlage,
- Fig. 4: ein Schaltbild mit den für die Erfindung wesentlichen Anlagekomponenten der ersten Ausführungsform,
- Fig. 5: ein entsprechendes Bild wie in Fig.4 zu einer zweiten erfindungsgemässen Filteranlage,
- Fig. 6: ein Schaltbild zu einer dritten Filteranlage,
- Fig. 7: ein Bild zu einer vierten Filteranlage gemäss der Erfindung,
- Fig.8a-e: eine Abfolge von Teilbildern zur Erläuterung der Funktionsweise der vierten Filteranlage und
- Fig. 9: einen Ausschnitt aus einer erfindungsgemässen Anlage mit Verbindungsleitungen zwischen Spülmedienkanal und Filterfeld, in denen sowohl Spülluft als auch Spülwasser gefördert werden können.

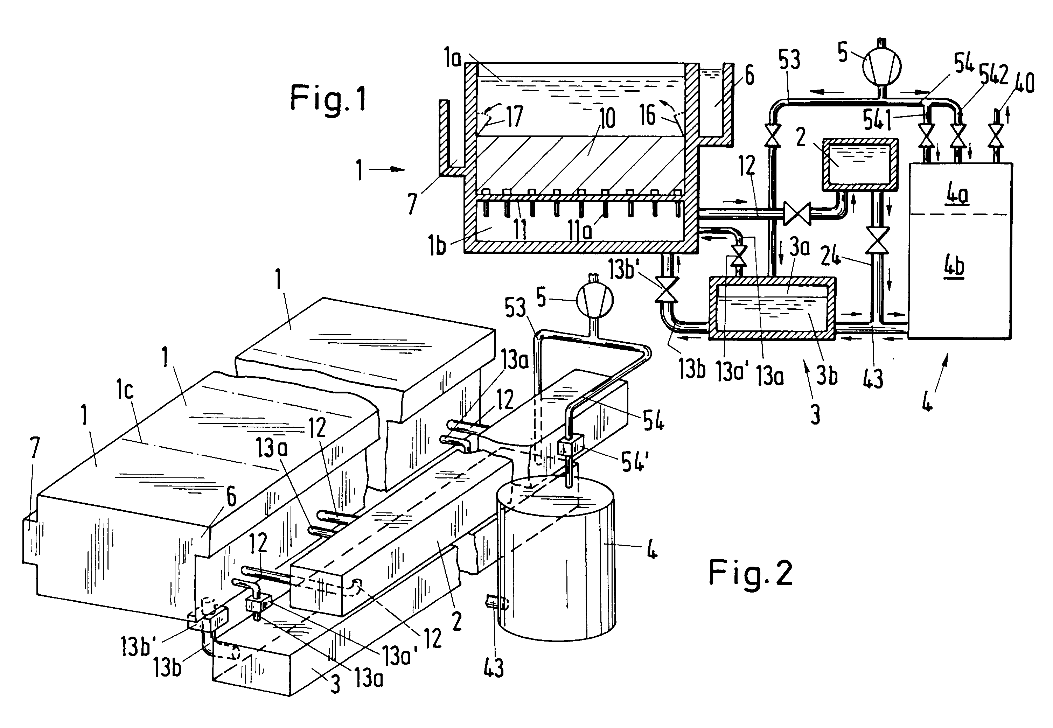

Die in Fig.1 dargestellte erste Ausführungsform der erfindungsgemässen Filteranlage weist folgende Komponenten auf: Ein Filterfeld 1, umfassend einen Zwischenboden 11 mit Bodendüsen 11a, einen Überstauraum 1a, einen Filtratsammelraum oder Polsterraum 1b und ein Filterbett 10; ein Filtratkanal 2, der mit dem Filterfeld 1 über eine Leitung 12 mit Absperrorgan verbunden ist; ein Spülmedienkanal 3 und ein Spülwasserspeicher 4, die durch eine Leitung 43 verbunden sind und aufgrund dieser Leitung 43 ein kommunizierendes Teilsystem bilden; ein Gebläse 5 zur Erzeugung von Druckluft (Druckluftquelle); ein Rohwasserkanal 6, aus dem sich über Zulaufstellen 16 (mit Klappen) Rohwasser in das Filterfeld 1 einspeisen lässt; schliesslich ein Schlammwasserkanal 7, der über Ablaufstellen 17 (mit Klappen) mit dem Überstauraum 1a des Filterfelds 1 verbunden ist.

In Fig.2 ist gezeigt, wie die Anlagenkomponenten der Fig.1 räumlich angeordnet sind. Die Anlage umfasst eine Gruppe von mehr als fünf Filterfeldern 1, die eine lineare Anordnung bilden. Die Grenzen zwischen benachbarten Filterfeldern 1 sind durch strichpunktierte Linien 1c angedeutet. Der Filtratkanal 2 und der Spülmedienkanal 3 erstrecken sich über die gesamte Länge der Filtergruppe.

Der Spülmedienkanal 3, siehe Fig.1, leitet im unteren Teil 3b Spülwasser und im oberen Teil 3a Spülluft. Die Spülluft und das Spülwasser lassen sich bei geöffnetem Absperrorgan 13a' bzw. 13b' über die Verbindungsleitung 13a bzw. 13b in den Polsterraum 1b des Filterfelds 1 einspeisen. Das Gebläse 5, das über die Leitung 53 mit dem Spülmedienkanal 3 verbunden ist, bildet die Druckluftquelle für die Spülluft. Mit dem Gebläse 5 wird auch Druckluft erzeugt, um Spülwasser aus dem Speicher 4 verdrängen zu können. Die zum Speicher 4 führende Druckluftleitung 54 verzweigt sich in zwei Äste 541 und 452. Während der Luft/Wasserspülung ist nur das Absperrorgan des Astes 541 geöffnet. Während der reinen Wasserspülung sind die Absperrorgane beider Äste 541 und 452 geöffnet. Nach Abschluss der Wasserspülphasen wird der Speicher 4 wieder gefüllt, indem das Absperrorgan der Leitung 24 zwischen dem Filtratkanal 2 und der Verbindungsleitung 43 geöffnet wird und gleichzeitig der Speicher 4 über die Leitung 40 entlüftet wird.

In Fig.2 ist der Einfachheit halber keine Verzweigung der Druckluftleitung 54 dargestellt. Die Entlüftungsleitung 40 ist nicht gezeichnet. Es fehlen auch weitere Details, beispielsweise die Verbindung 43 zwischen dem Speicher 4 und dem Spülmedienkanal 3. Einzelne Absperrorgane sind als Kästchen 13a', 13b' und 54' angedeutet. Weitere Absperrorgane (vgl. Fig.1) sind nicht dargestellt. Ferner sind die Eingangs- bzw. Ausgangsstellen für Rohwasser, Schlammwasser und Filtrat auch nicht angegeben.

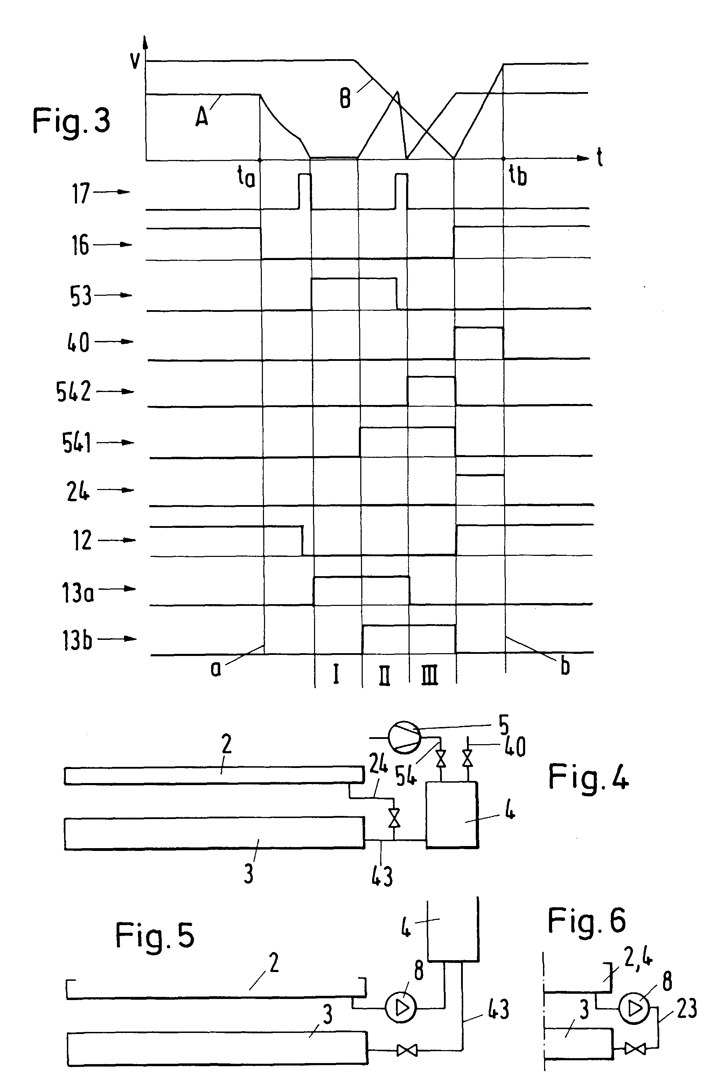

Anhand des Diagramms der Fig.3 lässt sich die weitgehend bekannte Funktionsweise der Filteranlage ablesen. Die Zeitachse t verläuft horizontal. Die Kurven A und B stellen die variablen Volumina v des Wassers im Überstauraum 1a bzw. des Wassers 4b im Speicher 4 dar. Die Rechteckkurven geben an, während welchen Zeitintervallen die Absperrorgane der Verbindungen 17, 16, ... und 13b offen (Linie der Recheckkurve: hoch) oder zu (tief) sind. Das Zeitintervall von tₐ bis t_{b} bzw. zwischen den Linien a und b umfasst die Spülphasen I (Luft), II (Luft/Wasser) und III (Wasser). Weitere Angaben zur Funktionsweise der Filteranlage findet man beispielsweise in: Karl Voss, Korrespondenz Abwasser, Heft 3/1995, Seite 475 bis 478.

Fig.4 zeigt nochmals sehr schematisch einen Teil der Anlage gemäss der ersten Ausführungsform, mit dem Filtratkanal 2, dem Spülmedienkanal 3, dem Spülwasserspeicher 4 und der Druckluftquelle 5. Fig.5 zeigt einen entsprechenden Teil einer zweiten Ausführungsform der erfindungsgemässen Filteranlage. Bei dieser Anlage ist der Spülwasserspeicher 4 hochliegend angeordnet. Er befindet sich in einer Höhe, aus der das Wasser allein aufgrund der Schwerkraft durch die Leitung 43 in den Spülmedienkanal fliessen kann. Der Speicher 4 kann mittels einer Pumpe 8 gefüllt werden, wobei Wasser aus dem Filtratkanal 2 abgepumpt wird.

Bei der dritten Ausführungsform, deren charakteristische Komponentenanordnung in Fig.6 zu sehen ist, wird das Spülwasser mit der Pumpe 8 direkt in den Spülmedienkanal 3 gefördert. In diesem Fall ist also der Filtratkanal 2 als Spülwasserspeicher 4 ausgebildet.

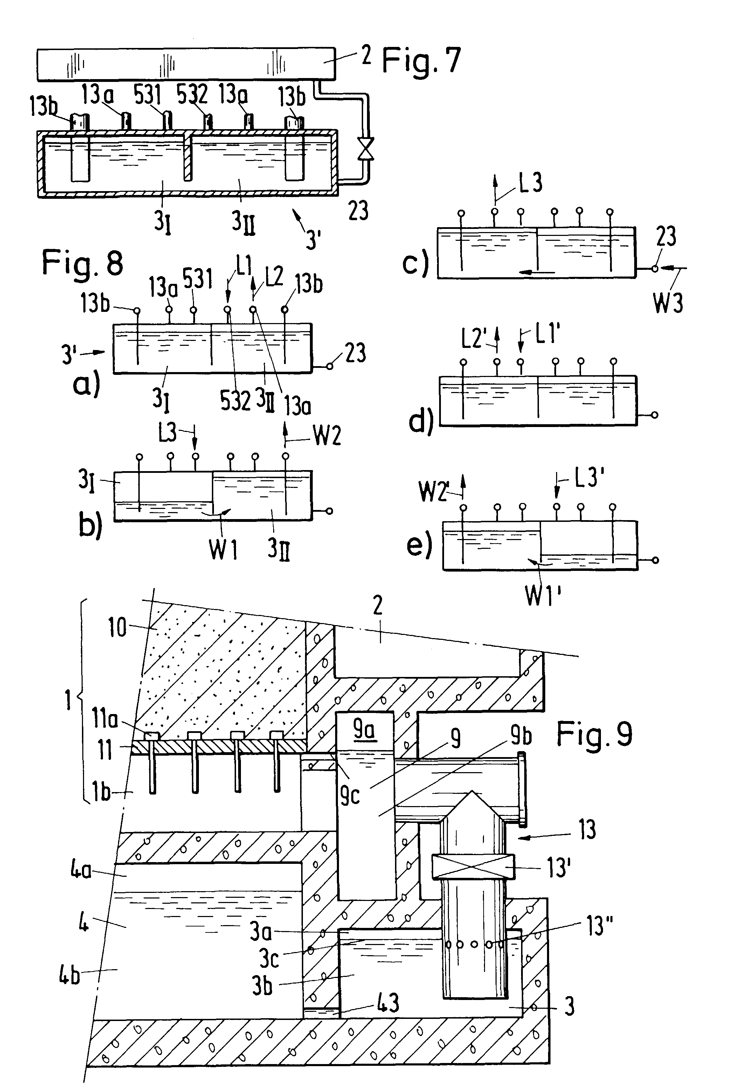

Weist eine Filteranlage mehr als einen Spülmedienkanal auf, so ist es möglich, periodisch jeweils einen der Spülmedienkanäle als Spülwasserspeicher zu verwenden. Dies soll anhand der Figuren 7 und 8 erläutert werden.

Unterhalb des Filtratkanals 2 in Fig.7 ist die Anlagenkomponente 3' angeordnet, die sich aus zwei kommunizierenden Spülmedienkanälen 3_{I} und 3_{II} zusammensetzt. Die Leitungen 13a und 13b sind die Spülmedienverbindungen zu nicht gezeigten Filterfeldern. Pro Spülmedienkanal 3_{I}, 3_{II} ist stellvertretend für eine Mehrzahl von Leitungspaaren 13a, 13b jeweils nur ein Leitungspaar dargestellt. Beide Spülmedienkanäle 3_{I} und 3_{II} stehen über je eine Leitung 531 bzw. 532 mit einer Druckluftquelle in Verbindung, wobei diese Verbindungsleitungen gleich wie die Leitung 53 der ersten Ausführungsform (Fig.1) jeweils ein Absperrorgan enthalten. Eine Leitung 23 mit Absperrorgan verbindet den Filtratkanal 2 mit dem Spülmedienkanal 3_{I} und damit indirekt auch auch mit dem Spülmedienkanal 3_{II}.

Das Teilbild a der Fig.8 stellt weiter vereinfacht nochmals die Anordnung 3' der Fig.7 dar. Anhand dieses Teilbilds a wird illustriert, wie während einer Luftspülphase eines Filterfeldes, das dem Spülmedienkanal 3_{II} zugeordnet ist, Spülluft L1 über die Leitung 532 zu- bzw. Spülluft L2 über die Leitung 13a weggeführt wird. Während einer nachfolgenden Wasserspülphase wird mittels Druckluft L3 - siehe Fig.8b - Wasser W1 aus dem Spülmedienkanal 3_{I} in den Spülmedienkanal 3_{II} verdrängt, aus dem es (Pfeil W2) weiter in das Filterfeld fliesst. Nach Abschluss der Wasserspülphasen wird - siehe Fig.8c - durch Entlüften des Spülmedienkanals 3_{I} (Pfeil L3) das als Spülwasser verloren gegangene Wasser aus dem Filtratkanal wieder nachgespeist (Pfeil W3). Teilbild d entspricht Teilbild a: nämlich Luftspülphase eines Filterfeldes, das dem Spülmedienkanal 3_{I} zugeordnet ist (mit Spülluft L1', L2'). Eine nachfolgende Wasserspülphase, entsprechend Fig.8b, zeigt Fig.8e (mit Spülwasser W1', W2' sowie Verdrängungsluft L3').

Der in Fig.9 dargestellte Ausschnitt zeigt einen Bereich in der Umgebung des Filterbodens. Unter dem Polsterraum 1b ist ein kanalförmiger Spülwasserspeicher 4 angeordnet (Luft 4a, Wasser 4b), der über eine Vielzahl von Durchbrüchen 43 mit dem Spülmedienkanal 3 verbunden ist. Statt separaten Verbindungsleitungen 13a und 13b für die Spülmedien ist hier lediglich eine Leitung 13 vorgesehen, durch die bei geöffnetem Absperrorgan 13' Luft, Wasser sowie auch ein Luft/Wasser-Gemisch gefördert werden können. Liegt der Wasserspiegel 3c über den Luftlöchern 13", wie in Fig.9 dargestellt, so ist nur Wasser förderbar. Wird der Wasserspiegel 3c abgesenkt, indem beispielsweise Wasser aus dem Spülmedienkanal 3 in den Spülwasserspeicher 4 verdrängt wird, so ist auch Luft - allein oder zusammen mit Wasser - förderbar.

Der Transport eines Luft/Wasser-Gemisches durch die Leitung 13 erfolgt unter starker Turbulenz. Es ist daher vorteilhaft, wenn dem Polsterraum 1b ein Vorpolsterraum 9 vorgeschaltet ist (siehe Fig.9), in dem das turbulente Zweiphasengemisch sich beruhigen kann. Im Vorpolsterraum 9 wird die Luft (Teilraum 9a) von dem Wasser (Teilraum 9b) getrennt. Die Luft für die Luftspülung strömt über Durchbrüche 9c in den Polsterraum 1b und von dort durch die Bodendüsen 11a in die Filtermasse 10.

Für das periodisch durchzuführende Auffüllen des Spülmittelspeichers 4 aus dem Filtratkanal 2 besteht eine nicht dargestellte Verbindungsleitung 24 (vgl. Fig.1). Diese Leitung 24 mündet hier nicht wie in Fig.1 in die Verbindung 43 ein. Sie kann entweder direkt am Spülwasserspeicher 4 angeschlossen sein oder aber auch am Spülmittelkanal 3, über den der Speicher 4 indirekt füllbar ist.

Die anhand der Fig.9 beschriebenen und neu hinzugekommenen Teile, nämlich die Verbindungsleitung 13, die einen gemeinsamen Transport von Spülluft und Spülwasser ermöglicht, und der Vorpolsterraum 9 lassen sich in allen erfindungsgemässen Filteranlagen einsetzen.

Das Filterbett 10 ist beispielsweise eine aus körnigem Material gebildeten Filtermasse. Insbesondere kann das Filterbett 10 in Form eines Mehrschichtfilters vorliegen (vgl. die eingangs zitierte EP-A 0 385 050). Derartige Filterbette sind beim Abtrennen von suspendierten Feststoffen (Schwebestoffen) aus Wasser vorteilhaft. Bei der biologischen Reinigung von Abwasser bildet das Trägermaterial für Mikroorganismen das Filterbett 10. Diese Filterbette sind beispielsweise durch ein Haufwerk von Teilchen oder eine geordnete Packung gegeben. In einer Filteranlage können auch verschiedene Sorten von Filterbette verwendet werden.

## Patentansprüche

1. Rückspülbare Filteranlage für das Reinigen von Wasser, mit mindestens einer Gruppe von Filterfeldern (1), mindestens einem Spülwasserspeicher (4) und Fördermitteln (5) für die Spülmedien, nämlich Spülluft sowie Spülwasser, wobei jeder Gruppe ein Spülmedienkanal (3) zugeordnet ist, dieser Kanal (3) mit den Filterfeldern der zugeordneten Gruppe jeweils über Leitungen (13a, 13b; 13) für die Spülmedien, ferner über eine Leitung (53) mit einer Druckluftquelle, nämlich dem Fördermittel für die Spülluft, und eine weitere Leitung (43) mit dem Spülwasserspeicher verbunden ist, der Spülmedienkanal ein abschliessbares Teilsystem bildet oder in einem solchen (3, 4) enthalten ist, welches gegen aussen durch in den Anschlussleitungen des Teilsystems angeordnete Absperrorgane (13a', 13b', 54') verschliessbar ist,
dadurch gekennzeichnet, dass jeder Spülmedienkanal so angeordnet ist, dass über dessen gesamte Länge ein mit Spülwasser gefüllter Teilraum (3b) von einem mit Spülluft gefüllten Teilraum (3a) überlagert ist und die Volumina der Teilräume durch Zugabe bzw. Entnahme von Spülwasser variierbar sind, so dass der wassergefüllte Teilraum (3b) als Puffer verwendbar ist.

2. Filteranlage nach Anspruch 1, dadurch gekennzeichnet, dass die Filterfelder (1) einer Gruppe linear nebeneinander angeordnet sind und dass der der Gruppe zugeordnete Spülmedienkanal (3) sich parallel zu der Gruppe sowie über deren ganzen Länge erstreckt.

3. Filteranlage nach Anspruch 1 oder 2, dadurch gekennzeichnet, dass der oder jeder Spülmedienkanal (3) mit dem oder mit einem der Spülwasserspeicher (4) zusammen ein kommunizierendes Teilsystem bildet, dass der Speicher an einer Druckluftquelle, insbesondere an der Druckluftquelle (5) für die Spülluft angeschlossen ist, so dass mittels Druckluft aus dem Speicher (4) Wasser in den Spülmedienkanal förderbar ist.

4. Filteranlage nach Anspruch 3, dadurch gekennzeichnet, dass ein Filtratsammelkanal (2) mit dem Spülwasserspeicher (4) direkt oder indirekt verbunden und derart angeordnet ist, dass bei Entlüftung des Speichers (4) Wasser aus dem Filtratsammelkanal in den Speicher einspeisbar ist.

5. Filteranlage nach Anspruch 1 oder 2, dadurch gekennzeichnet, dass der oder einer der Spülwasserspeicher (4) hochliegend angeordnet ist, so dass das Wasser aus dem Speicher (4) allein aufgrund der Schwerkraft in den Spülmedienkanal einspeisbar ist, und dass der Speicher mittels einer Pumpe (8) füllbar ist, die insbesonders Wasser aus einem Filtratkanal (2) entnimmt.

6. Filteranlage nach Anspruch 1 oder 2, dadurch gekennzeichnet, dass ein Filtratkanal (2) als Spülwasserspeicher (4) ausgebildet ist und dass mindestens eine Leitung (23), in der eine Pumpe (8) angeordnet ist, den Filtratkanal mit dem oder jedem Spülmedienkanal (3) verbindet, wobei mit der Pumpe Spülwasser aus dem Filtratkanal in den Spülmedienkanal förderbar ist.

7. Filteranlage nach Anspruch 1 oder 2, dadurch gekennzeichnet, dass die Anlage mindestens zwei Gruppen von Filterfeldern (1) umfasst und dass die den Gruppen zugeordneten Spülmedienkanäle (3_{I}, 3_{II}) derart ausgebildet sind, dass sie als Spülwasserspeicher nutzbar sind, derart nämlich, dass beim Spülen eines Filterfelds, das der einen Gruppe zugehört, der Spülmedienkanal der anderen Gruppe oder einer der anderen Gruppen als Speicher einsetzbar ist.

8. Filteranlage nach einem der Ansprüche 1 bis 7, dadurch gekennzeichnet, dass die Verbindungen zwischen Spülmedienkanal (3) und Filterfeldern (1) als Leitungen (13) für einen separaten wie auch gemeinsamen Transport von Spülluft und Spülwasser ausgebildet sind.

9. Filteranlage nach einem der Ansprüche 1 bis 8, dadurch gekennzeichnet, dass die Leitungen (13a, 13b; 13) für Spülluft und Spülwasser jeweils in einen dem Filterfeld vorgelagerten Vorpolsterraum (9) münden.

10. Verwendung einer Filteranlage gemäss einem der Ansprüche 1 bis 9 zum Abtrennen von suspendierten Feststoffen aus Wasser mit einer aus körnigem Material gebildeten Filtermasse (10), insbesondere mit einem Mehrschichtfilter.

11. Verwendung einer Filteranlage gemäss einem der Ansprüche 1 bis 9 zum biologischen Reinigen von Abwasser mit Trägermaterial für Mikroorganismen, das in Form eines Haufwerks von Teilchen und/oder einer geordneten Packung (10) vorliegt.

## Claims

1. Backwashable filtration plant for the purification of water, with at least one group of filtration areas (1), at least one flushing water reservoir (4) and forwarding means (5) for the flushing media, namely flushing air as well as flushing water, wherein a flushing media channel (3) is associated with each group; and wherein this channel (3) is connected to the filtration areas of the associated group in each case via lines (13a, 13b; 13) for the flushing media, is furthermore connected via a line (53) to a source of compressed air, namely to the forwarding means for the flushing air, and is connected via a further line (43) to the flushing water reservoir, with the flushing media channel forming an isolatable subsystem or being contained in such a subsystem (3, 4), which can be closed off relative to the outside by means of shut off members (13a', 13b', 54') placed in the connection lines of the subsystem, characterised in that each flushing media channel is so arranged that over its full length a subspace (3a) filled with flushing air lies above a subspace (3b) filled with flushing water and the volumes of the subspaces are variable by the addition or extraction of flushing water, so that the water filled subspace (3b) can be used as a buffer.

2. Filtration plant in accordance with claim 1 characterised in that the filtration areas (1) of a group are arranged linearly adjacent to one another; and in that the flushing media channel (3) associated with the group extends parallel to the group as well as over its entire length.

3. Filtration plant in accordance with claim 1 or 2 characterised in that the or each flushing media channel (3) forms a communicating subsystem together with the flushing water reservoir or with one of the flushing water reservoirs (4); and in that the reservoir is connected to a source of compressed air, in particular to the source of compressed air (5) for the flushing air, so that water can be forwarded from the reservoir (4) into the flushing media channel by means of compressed air.

4. Filtration plant in accordance with claim 3 characterised in that a filtrate collection channel (2) is directly or indirectly connected to the flushing water reservoir (4) and arranged in such a manner that water can be fed from the filtrate collection channel into the reservoir during ventilation of the reservoir (4).

5. Filtration plant in accordance with claim 1 or 2, characterised in that the or one of the flushing water reservoirs (4) is placed at an elevated position so that water can be fed from the reservoir (4) into the flushing media channel by the action of gravity alone; and in that the reservoir can be filled by means of a pump (8), which in particular takes water out of a filtrate channel (2).

6. Filtration plant in accordance with claim 1 or 2, characterised in that a filtrate channel (2) is executed as a flushing water reservoir (4); and in that at least one line (23), in which a pump (8) is inserted, connects the filtrate channel with the or each flushing media channel (3), with flushing water being conveyable by the pump from the filtrate channel into the flushing media channel.

7. Filtration plant in accordance with claim 1 or 2, characterised in that the plant comprises at least two groups of filtration areas (1); and in that the flushing media channels (3_{I}, 3_{II}) associated with the groups are executed in such a manner that they are usable as flushing water reservoirs, namely in such a manner that when a filtration area belonging to the one group is flushed, the flushing media channel of the other group or of one of the other groups can be used as a reservoir.

8. Filtration plant in accordance with one of the claims 1 to 7, characterised in that the connections between the flushing media channel (3) and the filtration areas (1) are executed as lines (13) for either a separate or a common transport of flushing air and flushing water.

9. Filtration plant in accordance with one of the claims 1 to 8, characterised in that the lines (13a, 13b; 13) for flushing air and flushing water each discharge into a preliminary buffer space (9) placed in front of the filtration area.

10. Use of a filtration plant in accordance with one of the claims 1 to 9 for separating suspended solids out of water with a filtration mass (10) formed of a granular material, in particular with a multiple layer filter.

11. Use of a filtration plant in accordance with one of the claims 1 to 9 for the biological purification of waste water with carrier material for micro-organisms which is present in the form of a heap of particles and/or as an ordered packing (10).

## Revendications

1. Installation de filtration à nettoyage par contre-courant pour le nettoyage de l'eau, avec au moins un groupe de chambres de filtration (1), au moins un réservoir d'eau de rinçage (4) et des moyens de convoyage (5) pour les milieux de rinçage, à savoir l'air de rinçage ainsi que l'eau de rinçage, où il est associé à chaque groupe un canal de milieu de rinçage (3), ce canal (3) est relié aux champs de filtration du groupe associé respectivement par des conduits (13a, 13b ; 13) pour les milieux de rinçage, en outre par un conduit (53) à une source d'air comprimée, à savoir le moyen de convoyage pour l'air de rinçage, et un conduit additionnel (43) est relié au réservoir d'eau de rinçage, le canal de milieu de rinçage formant un système partiel pouvant être fermé ou est contenu dans un tel système (3, 4), qui peut être fermé vers l'extérieur par des organes de blocage (13a', 13b', 54') disposés dans les conduits de raccordement du système partiel,
caractérisée en ce que chaque canal de milieu de rinçage est disposé de façon que sur la longueur totale de celui-ci, il se trouve au-dessus d'un espace partiel (3b) rempli d'eau de rinçage un espace partiel (3a) rempli d'air de rinçage, et que les volumes des espaces partiels peuvent être modifiés par l'addition respectivement le retrait d'eau de rinçage de telle sorte que l'espace partiel rempli d'eau (3b) est utilisable comme tampon.

2. Installation de filtration selon la revendication 1, caractérisée en ce que les champs de filtration (1) d'un groupe sont disposés linéairement les uns à côté des autres et que le canal de milieu de rinçage (3) associé au groupe s'étend parallèlement au groupe ainsi que sur toute la longueur de celui-ci.

3. Installation de filtration selon la revendication 1 ou 2, caractérisé en ce que le ou chaque canal de milieu de rinçage (3) forme avec le ou un des réservoirs d'eau de rinçage (4) ensemble un système partiel communiquant, que le réservoir de stockage est raccordé à une source d'air comprimé, notamment à la source d'air comprimé (5) pour l'air de rinçage de telle sorte qu'au moyen de l'air comprimé, l'eau peut être convoyée du réservoir de stockage (4) dans le canal de milieu de rinçage.

4. Installation de filtration selon la revendication 3, caractérisée en ce qu'un canal de collecte de filtrat (2) est relié au réservoir de stockage d'eau de rinçage (4) directement ou indirectement et est disposé de telle sorte que lors de l'aération du réservoir de stockage (4), l'eau du canal de collecte de filtrat peut être amené dans le réservoir de stockage.

5. Installation de filtration selon la revendication 1 ou 2, caractérisée en ce que le ou un des réservoirs de stockage d'eau de rinçage (4) est disposé en hauteur de telle sorte que l'eau du réservoir de stockage (4) peut être amenée uniquement par la force de gravité dans le canal de milieu de rinçage et que le réservoir de stockage peut être rempli par une pompe (8) qui retire notamment de l'eau d'un canal de filtrat (2).

6. Installation de filtration selon la revendication 1 ou 2, caractérisée en ce qu'un canal de filtrat (2) est réalisé comme réservoir de stockage d'eau de rinçage (4) et qu'au moins un conduit (23) dans lequel est disposée une pompe (8) relie le canal de filtrat au ou à chaque canal de milieu de rinçage (3), où avec la pompe, de l'eau de rinçage peut être convoyée du canal de filtrat dans le canal de milieu de rinçage.

7. Installation de filtration selon la revendication 1 ou 2, caractérisée en ce que l'installation comprend au moins deux groupes de champs de filtration (1) et que les canaux de milieu de rinçage (3_{I}, 3_{II}) associés aux groupes sont configurés de façon qu'ils puissent être utilisés comme réservoir de stockage d'eau de rinçage, à savoir de telle manière que lors du rinçage d'un champs de filtration qui fait partie d'un groupe, le canal de milieu de rinçage de l'autre groupe ou d'un des autres groupes est utilisable comme réservoir de stockage.

8. Installation de filtration selon l'une des revendications 1 à 7, caractérisée en ce que les liaisons entre le canal de milieu de rinçage (3) et les champs de filtration (1) sont réalisées comme conduits (13) pour un transport séparé et aussi commun d'air de rinçage et d'eau de rinçage.

9. Installation de filtration selon l'une des revendications 1 à 8, caractérisée en ce que les conduits (13a, 13b ; 13) pour l'air de rinçage et l'eau de rinçage débouchent respectivement dans un espace de tampon préalable (9) disposé en amont d'un champ de filtration.

10. Utilisation d'une installation de filtration selon l'une des revendications 1 à 9 pour séparer des matières solides en suspension de l'eau avec une masse de filtration (10) constituée d'un matériau granuleux, notamment avec un filtre à plusieurs couches.

11. Utilisation d'une installation de filtration selon l'une des revendications 1 à 9 pour le nettoyage biologique des eaux usées avec un matériau de support pour des micro-organismes qui se présentent sous la forme d'un tas à orientation accidentelle de particules et/ou d'une garniture ordonnée (10).
